(19) Europäisches Patentamt
European Patent Office
Office européen des brevets

(11) **EP 2 775 420 A1**

(12) **EUROPEAN PATENT APPLICATION**

(43) Date of publication:
**10.09.2014 Bulletin 2014/37**

(51) Int Cl.:
***G06F 21/62*** *(2013.01)*

(21) Application number: **13305246.4**

(22) Date of filing: **05.03.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventors:
• **Shikfa, Abdullatif**
  **91140 Villebon-sur-Yvette (FR)**
• **Moataz, Tarik**
  **35510 Cesson Sévigné (FR)**

(74) Representative: **ALU Antw Patent Attorneys**
**Intellectual Property and Standards**
**Copernicuslaan 50**
**2018 Antwerp (BE)**

(54) **Semantic search over encrypted data**

(57)    Method for determining an index (I) allowing search over encrypted data, performed by a device (6) for determining an index (I), comprising:
- determining (S1) a set ($\Delta$) of keywords ($W_i$) and first sets ($ID(W_i)$) of document identifiers associated with the keywords ($W_i$), in function of a set (D) of documents,
- obtaining (S2) a set (S) of stems ($s_i$) and second sets ($ID(s_i)$) of document identifiers associated with the stems ($s_i$), in function of the set ($\Delta$) of keywords ($W_i$) and the first sets ($ID(W_i)$) of document identifiers, and
- determining (S3) an index (I) which comprises encrypted information associating the stems ($s_i$) with the corresponding second set ($ID(s_i)$) of document identifiers.

$$D=\{D_1, \ldots, D_n\} \quad \text{S0}$$

$$\Delta=\{W_1, \ldots, W_l\}$$
$$ID(W_i) = \ldots \quad \text{S1}$$

$$S=\{s_1, \ldots, s_r\}=f(\Delta)$$
$$ID(s_i) = \ldots \quad \text{S2}$$

$$I = f(S, ID(s_i)) \quad \text{S3}$$

$$TX(I, E(D)) \quad \text{S4}$$

Fig. 3

EP 2 775 420 A1

**Description**

FIELD OF THE INVENTION

The present invention relates to the field of search over encrypted data.

BACKGROUND

With the advent of cloud computing, outsourcing storage has become an increasingly popular trend and many users are storing their data in the cloud in order to benefit from unlimited storage space. Some of this data is sensitive and must be protected from unauthorized access, including from cloud operators, classically considered honest-but-curious. A classical solution in this setting is for users to encrypt their data before sending them to the storage server. This solution protects the data but is at odds with the utility of the cloud, as the data becomes completely obfuscated and the cloud operator cannot extract any information from the data nor perform searches on it.

One interesting approach to solve this dilemma and allow searches on encrypted data lies in searchable encryption. Searchable encryption refers to techniques which enable a user to store his encrypted data in a remote server, then sending encrypted search queries and retrieving only the encrypted documents matching the search. The entire search operation is done on the server side without leaking any information concerning either the content of the query or the content of the documents.

In plaintext information retrieval, semantic search refers to techniques which enable a user to search not only documents containing a given keyword, but all documents containing related keywords which have a close meaning. A variety of techniques for plaintext semantic search are known, including stemming algorithms which improve the efficiency of the search.

The first known searchable encryption techniques allowed only exact single keyword search. These techniques have been extended to allow conjunctive exact keywords search or conjunctive subset search or conjunctive range query search.

However, there is no known technique for performing semantic search on encrypted data.

SUMMARY

It is thus an object of embodiments of the present invention to propose a solution for performing semantic search on encrypted data.

Accordingly, embodiments of the present invention relates to a method for determining an index allowing search over encrypted data, performed by a device for determining an index, comprising:

- determining a set of keywords and first sets of document identifiers associated with the keywords, in function of a set of documents,
- obtaining a set of stems and second sets of document identifiers associated with the stems, in function of the set of keywords and the first sets of document identifiers, and
- determining an index which comprises encrypted information associating the stems with the corresponding second set of document identifiers.

The method may comprise transmitting the index to an encrypted search server.

The method may comprise encrypting said documents, and transmitting the encrypted documents to a storage provider.

The storage provider may reside on a server of a cloud operator.

According to an embodiment, each stem is associated to a unique set of keywords and each keyword has only one stem, and wherein the second set of document identifiers associated with one stem is equal to the union of the first set of document identifiers associated with the keywords corresponding to said stem.

The method may comprise determining said set of stems in function of a statistical analysis of n-gram comprised in said documents.

Correspondingly, embodiments of the invention relates to a device for determining an index allowing search over encrypted data, comprising:

- means for determining a set of keywords and first sets of document identifiers associated with the keywords, in function of a set of documents,
- means for obtaining a set of stems and second sets of document identifiers associated with the stems, in function of the set of keywords and the first sets of document identifiers, and

- means for determining an index which comprises encrypted information associating the stems with the corresponding second set of document identifiers.

Embodiments of the invention relates to a method for performing semantic search over encrypted data, performed by a device for performing semantic search over encrypted data, comprising:

- obtaining a stem in function of a keyword,
- determining an encrypted search query in function of the stem, and
- transmitting the encrypted search query to an encrypted search server.

Correspondingly, embodiments of the invention relates to a device for performing semantic search over encrypted data, comprising:

- means for obtaining a stem in function of a keyword,
- means for determining an encrypted search query in function of the stem, and
- means for transmitting the encrypted search query to an encrypted search server.

Embodiments of the invention also provide a computer program comprising instructions for performing one of the methods mentioned before when said instructions are executed by a computer.

Embodiments of the invention also relate to a system comprising a device for determining an index, a device for performing semantic search over encrypted data, a storage provider and an encrypted search server.

BRIEF DESCRIPTION OF THE DRAWINGS

The above and other objects and features of the invention will become more apparent and the invention itself will be best understood by referring to the following description of embodiments taken in conjunction with the accompanying drawings wherein:

Figure 1 is a functional view of a system for semantic search on encrypted data,
Figure 2 is a structural view of a device of the system of figure 1,
Figure 3 is a flowchart of a method for determining an index according to an embodiment of the invention, and
Figure 4 is a flowchart of a method for performing semantic search over encrypted data according to an embodiment of the invention.

DESCRIPTION OF EMBODIMENTS

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represents various processes which may be substantially represented in computer readable medium and so executed by a computer or processor, whether or not such computer or processor is explicitly shown.

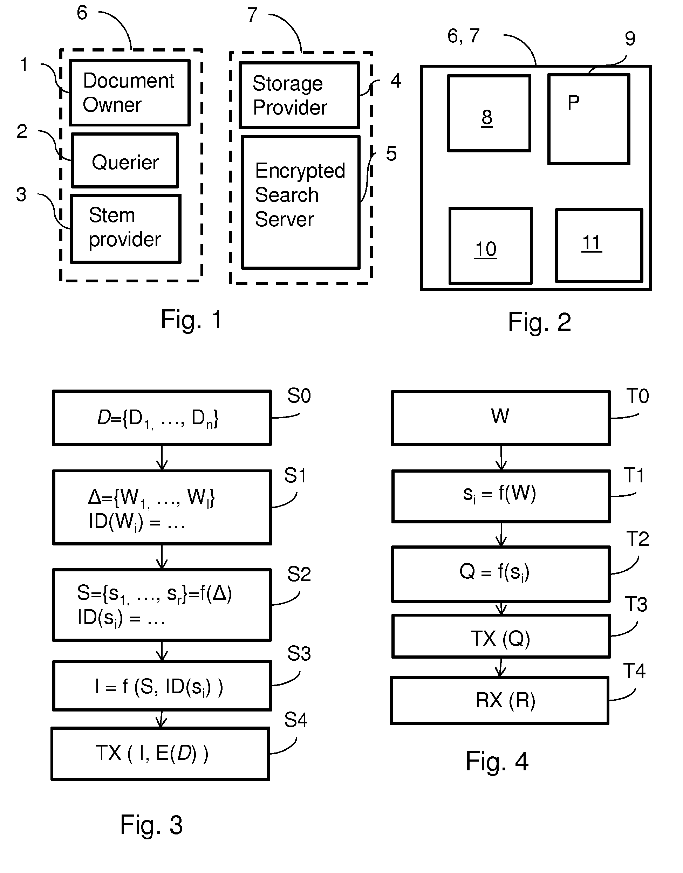

**Figure 1** shows a system for semantic search over encrypted data. The system of figure 1 comprises a document owner 1, a querier 2, a stem provider 3, a storage provider 4 and an encrypted search server 5.

Each of the document owner 1, the querier 2, the stem provider 3, the storage provider 4 and the encrypted search server 5 may correspond to a software module and/or a hardware module on a device. In the example of figure 1, the document owner 1, the querier 2 and the stem provider 3 reside on a user terminal 6, while the storage provider 4 and the encrypted search server 5 reside on a server 7 of a cloud operator. However, embodiments of the invention are not limited to this example. In particular, each of the document owner 1, the querier 2, the stem provider 3, the storage provider 4 and the encrypted search server 5 may reside on a distinct device (user terminal, server...)

The system of figure 1 allows semantic search over encrypted data. In a first phase, the document owner 1 encrypts documents, determines an encrypted index, stores the encrypted documents on the storage provider 4 and stores the encrypted index on the encrypted search server 5. In a second phase, the querier 2 may perform a semantic search on the encrypted documents, in function of a keyword, by sending a query to the encrypted search server 5. The search operation is then performed on the encrypted search server 5, by using the encrypted index, without leaking any information concerning either the content of the query or the content of the documents. Details of the first and second phase are described hereafter with reference to figures 3 and 4.

**Figure 2** is a structural representation of a device which may be any device on which resides at least one of the functional modules shown on figure 1, for example the user terminal 6 or the server 7 of figure 1. The device of figure 2 comprises a processor 8, a non-volatile memory 9, a volatile memory 10 and a communication interface 11. The processor 8 allows executing computer programs stored in non-volatile memory 9, using the volatile memory 10 as working memory. The communication interface 11 allows communicating with at least one other device, through a communication link or a network.

The non-volatile memory 9 may comprise a computer program P, the execution of which implements at least one of the functional modules of figure 1. In particular, the execution of computer program P may implement the document owner 1 and correspond to the execution of a method for determining an index according to an embodiment of the invention. Also, the execution of computer program P may implement the querier 2 and correspond to the execution of a method for performing semantic search over encrypted data according to an embodiment of the invention.

The device of figure 2 may be for example a personal computer, a handheld terminal such as a mobile phone, a server (or a group of servers) in a communication network...

**Figure 3** is a flowchart of a method for determining an index according to an embodiment of the invention, corresponding to the first phase mentioned above. The method of figure 3 is executed by a device for determining an index according to an embodiment of the invention, which may be for example the user terminal 6 on which the document owner 1 is implemented.

The document owner 1 has a set D of documents $D_1$, ..., $D_n$ (step S0). The document owner 1 whishes to store an encrypted version of the documents $D_1$, ..., $D_n$ on the storage provider 4.

The document owner 1 determines keywords $W_i$ associated with the documents $D_1$, ..., $D_n$ (step S1). For example, an algorithm automatically extracts keywords from the documents, and/or a user inputs tags associated with the documents. We denote $\Delta$ the set of keywords on D: $\Delta = \{W_1, ..., W_l\}$. We also denote $ID(W_i)$ the set of document identifiers of documents that contains (or more generally that are associated with) the keyword $W_i$: $ID(W_i) = \{id_{i,1}, ..., id_{i,m}\}$.

Then, the document owner 1 obtains, from the stem provider 3, a set *S* of stems $s_i$, in function of the set $\Delta$ of keywords $W_i$ (step S2): $S = \{s_1, ..., s_r\}$. When the document owner 1 and the stem provider 3 reside on the same device, such as the user terminal 6 of figure 1, this device determines the set of stems by applying a stemming algorithm itself. On the other hand, when the document owner 1 and the stem provider 3 reside on different devices, the device implementing the document owner 1 sends a request to the device which implements the stem provider 3 to obtain the set S of stems.

Each stem $s_i$ is associated to a unique set of keywords, and each keyword $W_j$ has only one stem. We denote $ID(s_i)$ the set of document identifiers of documents that contains (or more generally that are associated with) a keyword associated with stem $s_i$: $ID(s_i) = \{id_{i,1}, ..., id_{i,m'}\}$.

Any known stemming algorithm may be use by the stem provider 3 to determine the set S of stems $s_i$, in function of the set $\Delta$ of keywords $W_i$. For example, an affix stripping algorithm is an algorithm which applies rules in order to remove known prefix and suffix from words in order to identify a root. Another example is a statistical stemming algorithm, which identifies roots based on the frequencies of n-grams existing in the documents (recall that an n-gram is a group of n consecutive letters in a word). For example, n-grams which have the highest frequency are considered as affixes, and n-gram with the lowest frequency are classified as roots. Other mixed stemming algorithms combine an affix stripping approach with context information of a word in a document.

Then, the documents owner 1 determines an index I which comprises encrypted information associating the stems $s_i$ with the corresponding sets $ID(s_i)$ of document identifiers (step S3). In the field of searchable encryption, various techniques exist for determining an index which comprises encrypted information associating keywords with corresponding sets of document identifiers. These techniques may be used by the document owner 1 at step S3, only using the stems $s_i$ with the corresponding sets $ID(s_i)$ instead of keywords.

For example, the following algorithm may be used:

The identifiers sets $ID(s_i)$ are represented in lists $L_i$ which are stored in an array A: $A = \{L_1, ..., L_r\}$, with $L_{i,j} = <id_{i,j}, pt_{i,j}>$ representing the $j^{th}$ element of $L_i$ which is composed of the identifier $id_{i,j}$ of the $j^{th}$ document associated with $s_i$ and of the memory address $pt_{i,j}$ of the next element in A. To sum up, the linked list $L_i$ has then the following structure: $L_i = \{<id_{i,1}, pt_{i,2}>, ..., <id_{i,m'-1}, pt_{i,m'}>, <id_{i,m'}, NULL>\}$.

The array A is then scrambled uniformly at random such that the next position in the array does not necessarily correspond to the next element in the linked list (hence the importance of $pt_{i,j}$).

At this stage, for each stem $s_i$, $m'_i$ keys are generated such that $K(s_i) = \{k_{i,0}, k_{i,1}, ..., ki_{,m'i-1}\}$ and in each linked list $L_i$, the pointers are encrypted as follows:

$$L_{i,j} = < id_{i,j}, E_{ki,j-1}(pt_{i,j+1}\|k_{i,j}) >, \text{ where } E_{ki,j-1} \text{ denotes a symmetric encryption scheme such as AES, using key } k_{i,j-1}.$$

Finally, a look-up table T is determined to provide the point at the first element of each linked list. T consists of couples containing the encryption of a stem $s_i$ under a secret key K1 and the concatenation of the pointer $pt_{i,1}$ to $id_{i,1}$ and a key $k_{i,0}$ xored with a hash function $H_{K2}$ of the stem:

$$T_i = < E_{K1}(s_i), (pt_{i,1}\|k_{i,0}) \oplus H_{K2}(s_i) >.$$

Note that $E_{K1}(s_i)$ represents a virtual address recognized in a FKS dictionary, thereby the time for checking $pt_{i,1}\|k_{i,0}$ is constant.

The index I comprises the scrambled and encrypted array A and the look-up table T: I = (A, T).

Finally, the document owner 1 sends the encrypted documents E(D) to the storage provider 4 and the index I to the encrypted search server 5 (step S4). This conclude the first phase preparing the system of figure 1 for performing semantic search over the encrypted documents E(D) stored on the storage provider 4.

**Figure 4** is a flowchart of a method for performing semantic search over encrypted data, according to an embodiment of the invention, corresponding to the second phase mentioned above. The method of figure 4 is executed by a device for performing semantic search over encrypted data according to an embodiment of the invention, which may be for example the user terminal 6 on which the querier 2 is implemented.

The querier 2 whishes to perform a semantic search with a keyword W (step T0).

In order to obtain the documents associated not only with the keyword W but also documents associated with semantically close keywords, the querier 2 obtains the stem $s_i$ associated to the keyword W (step T1). For example, during the first phase described with reference to figure 3, the document owner 1 or the stem provider 3 stores a dictionary which associates the keywords $W_i$ with their corresponding stem $s_i$. The querier 2 may obtain the stem $s_i$ associated to the keyword W by interrogating the document owner 1 or the stem provider 3 which respond by consulting the dictionary. In a variant, the document owner 1 or the stem provider 3 may provide the dictionary to the querier 2 which may then determine the stem $s_i$ itself.

Then, the querier 2 determines an encrypted search query Q in function of the stem $s_i$ (step T2). The form of the query Q depends on the technique used to determine the index I, and may involve obtaining information from the document owner 1. For example, in the case of an index I determined as described above, the querier 2 obtains the key K1 from the document owner 1 and the query Q is: $Q = (E_{K1}(s_i), H_{K2}(s_i))$. The query Q is transmitted to the encrypted search server 5 (step T3). The processing of the query Q by the encrypted search server 5 depends on the technique used for determining the index I and the query Q. In the example of the index I and the query Q described above, the computation on the encrypted search server 5 may be summarized as follows:

- Find the value of $E_{K1}(s_i)$ in the look-up table T:

| $E_{K1}(s_1)$ | $(pt_{1,1}\|k_{1,0}) \oplus H_{K2}(s_1)$ |
|---|---|
| ... | |
| $E_{K1}(s_i)$ | $(pt_{i,1}\|k_{i,0}) \oplus H_{K2}(s_i)$ |
| ... | |
| $E_{K1}(s_r)$ | $(pt_{r,1}\|k_{r,0}) \oplus H_{K2}(s_r)$ |

and retrieve $pt_{i,1}\|k_{i,0}$
- In the array A:

| $< id_{i,1}, E_{ki,0}(pt_{i,2}\|k_{i,1}) >$ | ... | $< id_{j,r}, E_{kj,r-1}(pt_{i,r+1}\|k_{j,r}) >$ |
|---|---|---|
| | ... | $< id_{j,2}, E_{kj,1}(pt_{j,3}\|k_{j,2}) >$ |
| $< id_{j,1}, E_{kj,0}(pt_{j,2}\|k_{j,1}) >$ | ... | ... |

Retrieve the first identifier $id_{i,1}$ then decrypt the second part of $L_{i,1}$ using key $k_{i,0}$ and the pointer to $L_{i,2}$ and so on until the retrieval of all the identifier associated with the stem $s_i$.

Thus, the encrypted search server 5 has determined the document identifiers $id_{i,j}$ associated with stem $s_i$. It should be noted that no information about the content of the documents or the stem $s_i$ is leaked on the encrypted search server 5 side. The response R sent to the querier 2 may vary, depending on whether the encrypted search server 5 and the storage provider 4 correspond to the same entity or not:

- If the encrypted search server 5 and the storage provider 4 are the same entity, for example they reside on the same server 7 of figure 1 and/or share information, the response R may include the encrypted documents Dj corresponding to the document identifiers $id_{i,j}$ determined by the encrypted search server 5.
- If the encrypted search server 5 and the storage provider 4 are two separate entities, for example they reside on different device and/or do not share information, then the response R sent by the encrypted search server 5 comprises the document identifiers $id_{i,j}$. The querier 2 then matches these identifiers with the corresponding documents. This correspondence is known by the document owner 1, so in case the querier 2 is distinct from the document owner 1 he needs to fetch this information as well. Then the querier 2 requests directly the given documents from the storage provide 3.

At this point, the querier 2 has the encrypted documents corresponding to his query Q. To decrypt them, he needs the secret key used by the document owner 1. So there are again two cases:

- The document owner 1 provides directly the key to the querier 2, or
- The querier 2 sends the encrypted documents to the document owner 1 who then decrypts them and sends the clear documents to the querier 2.

In a variant of the method of Figure 4, the querier 2 sends the keyword W to the document owner 1. Then, at least steps T1 to T3 are performed by the document owner 1. Step T3 may involve transmitting the query Q to the encrypted search server 5 either directly or through the querier 2. In this variant, the document owner 1 may decide which queries it allows depending on the identity of the querier 2 and the content of the initial query containing the keyword W.

Embodiments of the method can be performed by means of dedicated hardware and/of software or any combination of both.

While the principles of the invention have been described above in connection with specific embodiments, it is to be clearly understood that this description is made only by way of example and not as a limitation on the scope of the invention, as defined in the appended claims.

**Claims**

1. Method for determining an index (I) allowing search over encrypted data, performed by a device (6) for determining an index (I), comprising:

    - determining (S1) a set ($\Delta$) of keywords ($W_i$) and first sets ($ID(W_i)$) of document identifiers associated with the keywords ($W_i$), in function of a set (D) of documents,
    - obtaining (S2) a set (S) of stems ($s_i$) and second sets ($ID(s_i)$) of document identifiers associated with the stems ($s_i$), in function of the set ($\Delta$) of keywords ($W_i$) and the first sets ($ID(W_i)$) of document identifiers, and
    - determining (S3) an index (I) which comprises encrypted information associating the stems ($s_i$) with the corresponding second set ($ID(s_i)$) of document identifiers.

2. Method according to claim 1, comprising:

    - transmitting (S4) the index (I) to an encrypted search server (5).

3. Method according to claim 1 or 2, comprising:

    - encrypting said documents, and
    - transmitting (S4) the encrypted documents (E(D)) to a storage provider (4).

4. Method according to claim 3, wherein the storage provider (4) resides on a server (7) of a cloud operator.

**5.** Method according to one of claims 1 to 4, wherein each stem ($s_i$) is associated to a unique set of keywords and each keyword ($W_i$) has only one stem, and wherein the second set ($ID(s_i)$) of document identifiers associated with one stem is equal to the union of the first set ($ID(W_i)$) of document identifiers associated with the keywords corresponding to said stem.

**6.** Method according to one of claim 1 to 5, comprising determining said set (S) of stems ($s_i$) in function of a statistical analysis of n-gram comprised in said documents.

**7.** Device for determining an index (I) allowing search over encrypted data, comprising:

- means for determining a set ($\Delta$) of keywords ($W_i$) and first sets ($ID(W_i)$) of document identifiers associated with the keywords ($W_i$), in function of a set (D) of documents,
- means for obtaining a set (S) of stems ($s_i$) and second sets ($ID(s_i)$) of document identifiers associated with the stems ($s_i$), in function of the set ($\Delta$) of keywords ($W_i$) and the first sets ($ID(W_i)$) of document identifiers, and
- means for determining an index (I) which comprises encrypted information associating the stems ($s_i$) with the corresponding second set ($ID(s_i)$) of document identifiers.

**8.** Computer program (P) comprising instructions for performing the method of one of claims 1 to 6 when said instructions are executed by a computer.

**9.** Method for performing semantic search over encrypted data, performed by a device (6) for performing semantic search over encrypted data, comprising:

- obtaining (T1) a stem ($s_i$) in function of a keyword (W),
- determining (T2) an encrypted search query (Q) in function of the stem ($s_i$), and
- transmitting (T3) the encrypted search query (Q) to an encrypted search server (5).

**10.** Device (6) for performing semantic search over encrypted data, comprising:

- means for obtaining a stem ($s_i$) in function of a keyword (W),
- means for determining an encrypted search query (Q) in function of the stem ($s_i$), and
- means for transmitting (T3) the encrypted search query (Q) to an encrypted search server (5).

**11.** Computer program (P) comprising instructions for performing the method of claim 9 when said instructions are executed by a computer.

**12.** System comprising a device for determining an index (I) according to claim 7, a device for performing semantic search over encrypted data according to claim 10, a storage provider (4) and an encrypted search server (5).

Fig. 1

Fig. 2

Fig. 3

$$D=\{D_1, ..., D_n\} \quad \text{S0}$$

$$\Delta=\{W_1, ..., W_l\} \quad \text{S1}$$
$$ID(W_i) = ...$$

$$S=\{s_1, ..., s_r\}=f(\Delta) \quad \text{S2}$$
$$ID(s_i) = ...$$

$$I = f (S, ID(s_i)) \quad \text{S3}$$

$$TX ( I, E(D)) \quad \text{S4}$$

Fig. 4

$$W \quad \text{T0}$$

$$s_i = f(W) \quad \text{T1}$$

$$Q = f(s_i) \quad \text{T2}$$

$$TX (Q) \quad \text{T3}$$

$$RX (R) \quad \text{T4}$$

Europäisches
Patentamt

European
Patent Office

Office européen
des brevets

# EUROPEAN SEARCH REPORT

Application Number

EP 13 30 5246

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/078914 A1 (ROEDER THOMAS M [US] ET AL) 29 March 2012 (2012-03-29) <br> * paragraph [0032] - paragraph [0069]; claims 1, 2, 11; figures 1, 2, 3, 4, 5, 9 * | 1-12 | INV. <br> G06F21/62 |

-----

TECHNICAL FIELDS
SEARCHED (IPC)

G06F

The present search report has been drawn up for all claims

| Place of search | Date of completion of the search | Examiner |
|---|---|---|
| Munich | 20 August 2013 | Savvides, George |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................

& : member of the same patent family, corresponding
document

EPO FORM 1503 03.82 (P04C01)

**EP 2 775 420 A1**

## ANNEX TO THE EUROPEAN SEARCH REPORT
## ON EUROPEAN PATENT APPLICATION NO.

EP 13 30 5246

This annex lists the patent family members relating to the patent documents cited in the above-mentioned European search report.
The members are as contained in the European Patent Office EDP file on
The European Patent Office is in no way liable for these particulars which are merely given for the purpose of information.

20-08-2013

| Patent document cited in search report | Publication date | Patent family member(s) | Publication date |
|---|---|---|---|
| US 2012078914 A1 | 29-03-2012 | NONE | |

For more details about this annex : see Official Journal of the European Patent Office, No. 12/82

EPO FORM P0459

10